# EUROPEAN PATENT APPLICATION

(11) **EP 4 759 675 A1**
(43) Date of publication of application: **17.06.2026**
(21) Application number: 24851321.0
(22) Date of filing: 08.04.2024
(51) Int. Cl.: B62D 5/04, F16H 25/12

(54) **VEHICLE STEERING DEVICE**

(30) Priority: 07.08.2023 JP 2023128858
(71) Applicant: NSK Steering & Control, Inc., Tokyo, 141-0032 (JP)
(72) Inventor: NISHIDA, Kazuki, Maebashi-shi, Gunma 371-8527 (JP)
(74) Representative: SSM Sandmair
(86) International application number: PCT/JP2024/014243
(87) International publication number: WO 2025/032887

(57) **Abstract**

A vehicle steering device includes: a rotating member including an external thread portion and a cylindrical surface portion; a nut that moves in an X direction with respect to the rotating member in a non-rotating state; an annular member that is inserted into the cylindrical surface portion and is movable in the X direction; and a housing. The annular member has vertical wall portions each having a flat plate shape. In the external thread portion of the rotating member, a first incomplete thread is disposed at an end on one side in the axial direction, and a second incomplete thread is disposed at an end on the other side in the axial direction. A surface on one side in the axial direction of the first incomplete thread is provided with an axial end surface portion and a separation portion. The surface on the other side in the axial direction of the second incomplete thread is provided with an axial end surface portion and a separation portion.

## Description

### Field

What is disclosed herein relates to a vehicle steering device.

### Background

A steer-by-wire vehicle steering device has a configuration in which a steering wheel and a turning wheel are mechanically disconnected. In this configuration, the steering reaction force is not transmitted from a turning mechanism including the turning wheel to the steering wheel. Therefore, a steering reaction force device and a stopper mechanism unit are provided on a steering shaft connected to the steering wheel.

The steering reaction force device applies, to the steering wheel, a reaction force in a direction opposite to a rotation direction (steering direction) of the steering wheel to give a natural steering feel to the driver. The steering reaction force device includes, for example, a motor and a deceleration mechanism, and the steering reaction force generated by the motor is transmitted to the steering shaft via a deceleration mechanism. The deceleration mechanism includes a worm shaft and a worm wheel, for example. When a shaft tooth of the worm shaft meshes with a wheel tooth of the worm wheel, rotation of the motor is transmitted to the worm wheel via the worm shaft.

In Patent Literature 1, the stopper mechanism unit includes: a rotating member that rotates together with a steering wheel and has an external thread on an outer circumference; a nut that has an internal thread on an inner circumference and makes a linear motion in an axial direction with respect to the rotating member; and a stopper that stops the linear motion of the nut. The rotating member includes an external thread portion and a cylindrical surface portion adjacent to the external thread portion in the axial direction. The stopper includes: an annular member fitted to the outer circumference of the cylindrical surface portion; and a leaf spring fitted to the outer circumferential side of the annular member.

### Citation List

### Patent Literature

Patent Literature 1: German Patent No. 102020126785

### Summary

### Technical Problem

The external thread portion includes a complete thread portion and incomplete thread portions adjacent to opposite sides of the complete thread portion in the axial direction. The incomplete thread has lower strength than the complete thread. Therefore, in Patent Literature 1, a cylindrical surface portion is provided at a position on the outer side and the inner circumferential side in the axial direction with respect to the end of the incomplete thread portion in the axial direction so as to prevent the annular member and the leaf spring from contacting the incomplete thread. This might enlarge the stopper mechanism unit according to Patent Literature 1 in the axial direction, which might enlarge the vehicle steering device.

The present disclosure has been made in view of the above-described problems, and aims to provide a vehicle steering device that has achieved further downsizing.

### Solution to Problem

In order to achieve the above object, a vehicle steering device according to an aspect is a vehicle steering device in which a steering wheel and a turning wheel are mechanically disconnected. The vehicle steering device includes a stopper mechanism unit that regulates a range of a rotation angle of the steering wheel when the steering wheel is rotated. The stopper mechanism unit includes: a rotating member that includes an external thread portion and a pair of cylindrical surface portions, the external thread portion having an outer circumference provided with an external thread including a complete thread and an incomplete thread, the pair of cylindrical surface portions being adjacent to the external thread portion on one side and the other side in an axial direction of a central axis and having a cylindrical surface having a diameter smaller than an outer diameter of the external thread portion, the rotating member being configured to rotate in a circumferential direction around the central axis as the steering wheel rotates; a nut that has an inner circumference provided with an internal thread configured to mesh with the external thread and is configured to move in an axial direction with respect to the rotating member by the rotation of the rotating member; a pair of annular members each of which is configured to be inserted into a corresponding one of the pair of cylindrical surface portions of the rotating member so as to be capable of abutting on the nut in the axial direction; and a housing configured to be disposed on an outer circumferential side of the rotating member, the nut, and the pair of annular members and configured to support each of the pair of annular members between the housing and the rotating member. The external thread portion of the rotating member has a configuration in which a first incomplete thread is disposed at an end on one side in an axial direction, a second incomplete thread is disposed at an end on the other side in the axial direction, and the complete thread is disposed between the first incomplete thread and the second incomplete thread. An axial end surface portion extending along a first plane orthogonal to the central axis and a separation portion separating from the first plane on the other side in the axial direction are provided on a surface on one side in the axial direction of the first incomplete thread. An axial end surface portion extending along a second plane orthogonal to the central axis and a separation portion separating from the second plane on one side in the axial direction are provided on a surface on the other side in the axial direction of the second incomplete thread.

As described above, in the stopper mechanism unit according to Patent Literature 1, the incomplete thread has lower strength than the complete thread, and thus, a cylindrical surface portion is provided at a position on the outer side and the inner circumferential side in the axial direction with respect to the end of the incomplete thread portion in the axial direction so as to prevent the annular member and the leaf spring from contacting the incomplete thread. In addition, the annular member is fitted to the cylindrical surface portion, and the leaf spring is fitted to the outer circumferential side of the annular member. This might enlarge the stopper mechanism unit according to Patent Literature 1 in the axial direction, having a possibility of eventually enlarging the vehicle steering device.

In contrast, in the stopper mechanism unit according to the present disclosure, the axial end surface portion on one side in the axial direction of the first incomplete thread abuts on a nut-side end surface of the vertical wall portion of the annular member, while the axial end surface portion on the other side in the axial direction of the second incomplete thread abuts on the nut-side end surface of the vertical wall portion of the annular member.

Therefore, in the present disclosure, first, when the nut moves to one side in the axial direction by the rotation of the rotating member and the axial end surface of the nut abuts on the vertical wall portion of the annular member, the rotating member is pushed out to the other side, generating a gap in the axial direction between the rotating member and the annular member on one side in the axial direction. The rotating member pushed out to the other side compresses the annular member on the other side, and the reaction force pushes back the axial end surface portion of the second incomplete thread to the one side, but the separation portion does not abut on the vertical wall portion.

That is, when the stopper mechanism unit is viewed from the side (radial direction orthogonal to the central axis), in the annular member, a portion that contacts the axial end surface portion behaves to swell toward the nut side, and a portion facing the separation portion does not change in thickness. Therefore, when viewed from the side, the annular member is compressed but does not exhibit rotational behavior. Therefore, as compared with the behavior in which the annular member does not rotate (swing), the reaction force applied from the annular member to the first incomplete thread and the second incomplete thread is smaller, decreasing the likelihood of damage on the first incomplete thread and the second incomplete thread.

In this manner, in the stopper mechanism unit according to the present disclosure, the rotating member is pushed out in the direction opposite to the movement direction of the nut to compress the annular member, and the annular member pushes back the incomplete thread portion by the reaction force, further decreasing the force applied by the annular member to the first and second incomplete threads. This makes it possible to allow the annular member to abut on the first and second incomplete threads. In addition, since the first and second incomplete threads abut on the annular member, the dimension in the axial direction can be set smaller than that in Patent Literature 1, making it eventually possible to provide a vehicle steering device that has achieved further downsizing.

As a desired aspect, when the rotating member is viewed in the axial direction, the axial end surface portion of the first incomplete thread and the axial end surface portion of the second incomplete thread are disposed on a same side with respect to the central axis.

As described above, when the nut moves to one side in the axial direction by the rotation of the rotating member and the axial end surface portion on one side of the nut abuts on the vertical wall portion of the annular member on one side, the rotating member is pushed out to the other side to compress the annular member on the other side, and by its reaction force, the rotating member swings in the clockwise direction as viewed in the radial direction, for example.

In addition, when the nut moves to the other side in the axial direction by the rotation of the rotating member and the axial end surface portion of the nut on the other side abuts on the vertical wall portion of the annular member on the other side, the vertical wall portion is compressed, and by its reaction force, the rotating member swings in the counterclockwise direction as viewed in the radial direction.

In this manner, since the swing directions of the rotating member when viewed in the radial direction are opposite to each other when the nut moves to one side in the axial direction and when the nut moves to the other side, it is possible to reduce a local load continuously applied to a specific portion of the annular member.

As a desired aspect, when the rotating member is viewed in the axial direction, the axial end surface portion of the first incomplete thread and the axial end surface portion of the second incomplete thread are disposed on opposite sides with respect to the central axis.

As described above, when the nut moves to one side in the axial direction by the rotation of the rotating member and the axial end surface portion on one side of the nut abuts on the vertical wall portion of the annular member on one side, the rotating member is pushed out to the other side to compress the annular member on the other side, and by its reaction force, the rotating member swings in the clockwise direction as viewed in the radial direction, for example.

In addition, when the nut moves to the other side in the axial direction by the rotation of the rotating member and the axial end surface portion of the nut on the other side abuts on the vertical wall portion of the annular member on the other side, the vertical wall portion is compressed.

Here, when the rotating member is viewed in the axial direction, the axial end surface portion of the first incomplete thread and the axial end surface portion of the second incomplete thread are disposed on opposite sides with respect to the central axis. Therefore, the axial end surface portion of the first incomplete thread and the axial end surface portion of the second incomplete thread are opposite to the case where they are disposed on the same side with respect to the central axis, and the rotating member swings in the clockwise direction when viewed in the radial direction due to the reaction force of the vertical wall portion against the compression.

In this manner, the swing directions of the rotating member when viewed in the radial direction are the same when the nut moves to one side in the axial direction and when the nut moves to the other side. In this case, there is a possibility that a local load is applied to a specific portion of the annular member. However, for example, by rotating the rotating member 180 degrees, for example, about the axis of the central axis after a predetermined period elapses, it is possible to inhibit continuous application of the local load to the specific portion of the annular member.

As a desired aspect, at least one of the pair of annular members comprises a main body and a covering layer provided on a surface layer portion of the main body, and an elastic modulus of the covering layer is smaller than an elastic modulus of the main body. This makes it possible to reduce a contact sound (interference sound) when the nut abuts on the annular member. It is also allowable to select a material that reduces the coefficient of friction with the mating material as the material of the covering layer to prevent catching at the time of nut abutment. In addition, grease lubrication may be used instead of the covering layer.

As a desired aspect, at least one of the pair of annular members has a protrusion that protrudes toward the nut in the axial direction and is capable of abutting on the nut.

With this configuration, a movable distance in the axial direction of the nut becomes small with respect to the annular member having no protrusion. Therefore, the limit range of the turning angle of the turning wheel can be reduced to set the rotatable angle of the steering wheel to be smaller.

As a desired aspect, the housing includes: a housing main body having a tubular shape and extending in a circumferential direction; and a sealing portion configured to seal one side in an axial direction of the housing main body.

In this manner, since the housing is sealed by the sealing portion, it is possible to prevent entry of foreign matter such as dust to the inside of the housing. In addition, it is possible to inhibit leakage of the oil inside the housing to the outside.

As a desired aspect, the housing includes: a cylindrical housing main body extending in a circumferential direction and having an opening on one side in an axial direction; a projection disposed at an end on one side in the axial direction of the housing main body and provided with a recess that protrudes toward an inner circumferential side and is recessed toward an outer circumferential side; and a seal member accommodated in the recess. The annular member is disposed on an inner circumferential side of the recess of the projection, and a distal end on an inner circumferential side of the seal member is capable of abutting on an outer circumferential surface of the annular member.

Since the housing main body is provided with an opening, foreign matter such as dust can enter from the opening toward the inside of the housing. However, since the distal end of the seal member abuts on the annular member, entry of foreign matter can be inhibited. In addition, the seal member can inhibit leakage of the oil inside the housing to the outside.

### Advantageous Effects of Invention

According to the present disclosure, it is possible to provide a vehicle steering device that has achieved further downsizing.

### Brief Description of Drawings

FIG. 1 is a schematic diagram illustrating an overall configuration of a vehicle steering device according to a first embodiment.
FIG. 2 is a cross-sectional view illustrating a part of FIG. 1.
FIG. 3 is a cross-sectional view illustrating a part of FIG. 2.
FIG. 4 is a cross-sectional view of a stopper mechanism unit according to the first embodiment.
FIG. 5 is an enlarged cross-sectional view of a part of FIG. 4.
FIG. 6 is an exploded perspective view of the stopper mechanism unit according to the first embodiment.
FIG. 7 is a perspective view of a rotating member of FIG. 6.
FIG. 8 is a side view of the rotating member of FIG. 6.
FIG. 9 is a schematic diagram of the rotating member of FIG. 8 as viewed in direction A.
FIG. 10 is a schematic diagram of the rotating member of FIG. 8 as viewed in direction B.
FIG. 11 is a side view of a rotating member according to a modification.
FIG. 12 is a schematic diagram of the rotating member of FIG. 11 as viewed in direction A.
FIG. 13 is a schematic diagram of the rotating member of FIG. 11 as viewed in direction B.
FIG. 14 is a cross-sectional view of a stopper mechanism unit according to a second embodiment.
FIG. 15 is an enlarged cross-sectional view of a first annular member of FIG. 14.
FIG. 16 is a cross-sectional view of a stopper mechanism unit according to a third embodiment.
FIG. 17 is a cross-sectional view of a stopper mechanism unit according to a fourth embodiment.
FIG. 18 is a cross-sectional view of a stopper mechanism unit according to a fifth embodiment. Description of Embodiments

Embodiments of the present invention will be described in detail with reference to the drawings. The present invention is not intended to be limited by the following embodiments. Constituent elements in the following embodiments include elements easily assumed by a person skilled in the art, or equivalents. Moreover, constituent elements in the following embodiments may be appropriately combined with each other. Furthermore, portions having the same structure are denoted by the same reference numerals, and the description thereof will be omitted. In the coordinates, the X direction indicates the axial direction of the rotating member, the X1 side is one side in the axial direction, and the X2 side is the other side in the axial direction.

### (First Embodiment)

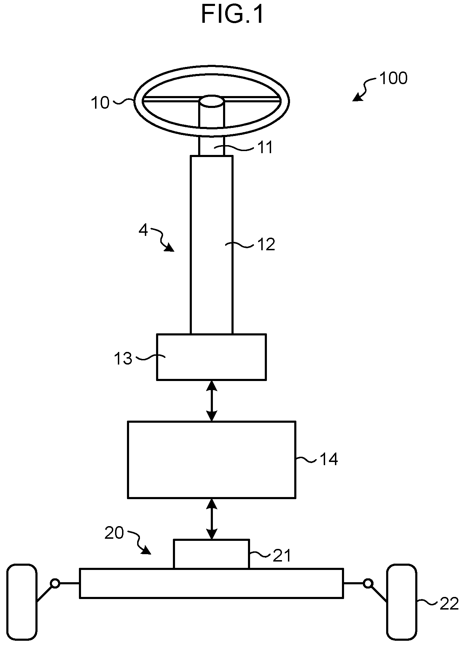

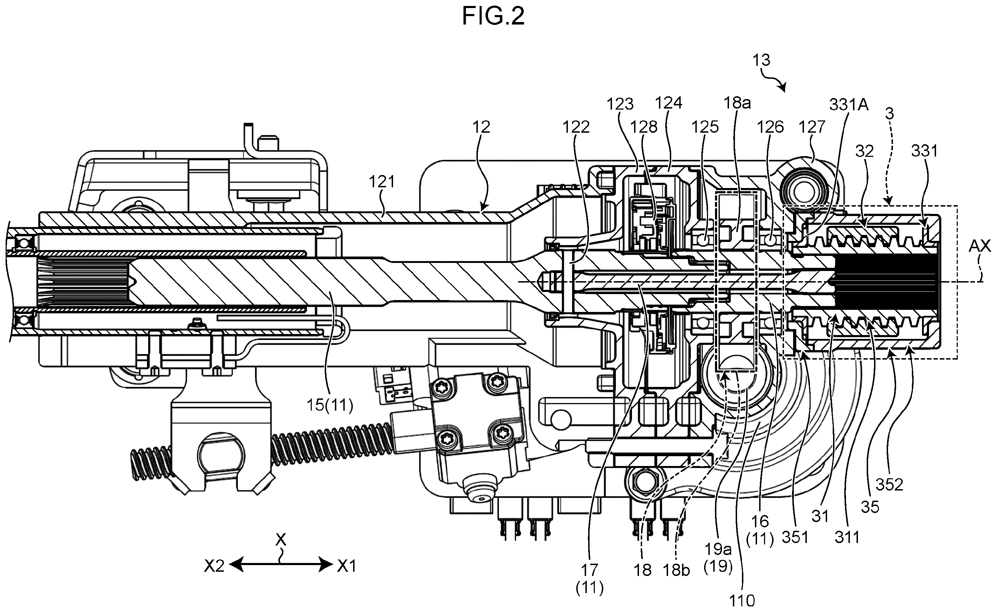

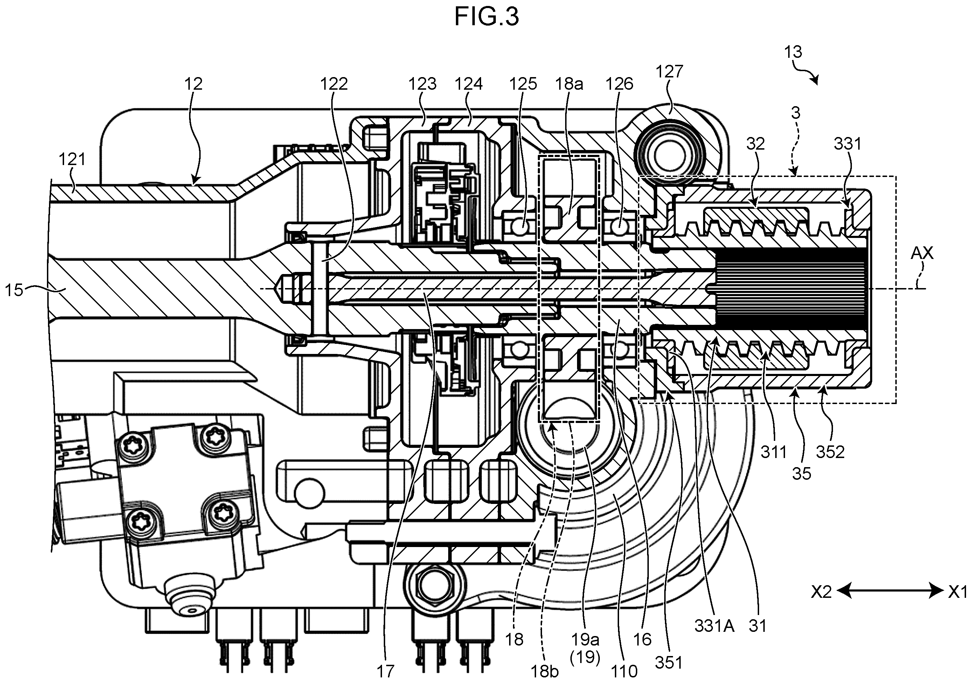

A first embodiment will be described. FIG. 1 is a schematic diagram illustrating an overall configuration of a vehicle steering device according to the first embodiment. FIG. 2 is a cross-sectional view illustrating a part of FIG. 1. FIG. 3 is a cross-sectional view illustrating a part of FIG. 2.

As illustrated in FIG. 1, a vehicle steering device 100 includes a steering unit 4, a control device (ECU) 14, and a turning unit 20.

As illustrated in FIGS. 1 to 3, the steering unit 4 is provided with a steering reaction force device 13. When rotating and steering a steering wheel 10, the steering reaction force device 13 applies, to the steering wheel 10, a steering reaction force in a direction opposite to the rotation direction of the steering wheel 10. The control device (ECU) 14 calculates reaction torque according to the traveling state of the vehicle based on the operation information, adjusts the power value to be supplied to a motor 110 of the steering reaction force device 13 based on the reaction torque, and the motor 110 operates in accordance with the power value, allowing the steering reaction force of the steering wheel 10 to be transmitted to the operator. In the steer-by-wire vehicle steering device 100, the steering wheel 10 and a turning wheel 22 are mechanically disconnected. However, in the present invention, the term "disconnected" includes, for example, a mode in which the steering wheel 10 and the turning wheel 22 can be connected by a clutch device or the like in an emergency, etc.

In addition, the control device (ECU) 14 calculates a current command value based on the operation information and controls a current to be supplied to a turning motor 21 of the turning unit 20. In the turning unit 20, the turning wheel 22 turns via various gears connected to the turning motor 21. Hereinafter, each configuration of the vehicle steering device 100 will be described in detail.

As illustrated in FIG. 1, the steering unit 4 includes a steering wheel 10, a steering shaft 11, a steering housing 12, and a steering reaction force device 13.

As illustrated in FIGS. 2 and 3, the steering shaft 11 extends in the X direction (axial direction). The steering wheel 10 is rotatably connected to the steering shaft 11. The steering shaft 11 is housed inside the steering housing 12. The steering shaft 11 includes a column shaft 15, an output shaft 16, and a torsion bar 17.

The column shaft 15 and the output shaft 16 are connected to each other via the torsion bar 17. Specifically, an insertion hole is provided in the axial direction at an X1 side end of the column shaft 15, and the torsion bar 17 is inserted into the insertion hole. The column shaft 15 and the torsion bar 17 are relatively non-rotatably connected to each other via a pin 122. The output shaft 16 is provided with a through hole penetrating in the axial direction, and an X1 side end of the torsion bar 17 is fitted into the through hole. With this configuration, the output shaft 16 and the torsion bar 17 are relatively non-rotatably connected to each other. As described above, rotating the steering wheel 10 also rotates the steering shaft 11.

In addition, the steering housing 12 includes a shaft holding member 121, rotation support members 123 and 124, and a sub-housing 127.

The rotation support member 123 is located on the X1 side of the shaft holding member 121, while the rotation support member 124 is located on the X1 side of the rotation support member 123. The sub-housing 127 is located on the X1 side of the rotation support member 124. A bearing 125 is provided inside the rotation support member 124 in the radial direction, while a bearing 126 is provided inside the sub-housing 127 in the radial direction. The output shaft 16 is rotatably supported via bearings 125 and 126. A torque sensor 128 is provided between the rotation support member 123 and the rotation support member 124. The torque sensor 128 detects rotational torque transmitted between the column shaft 15 and the output shaft 16.

Here, the steering reaction force device 13 includes a steering shaft 11, a worm wheel 18, a worm shaft 19, and a motor 110.

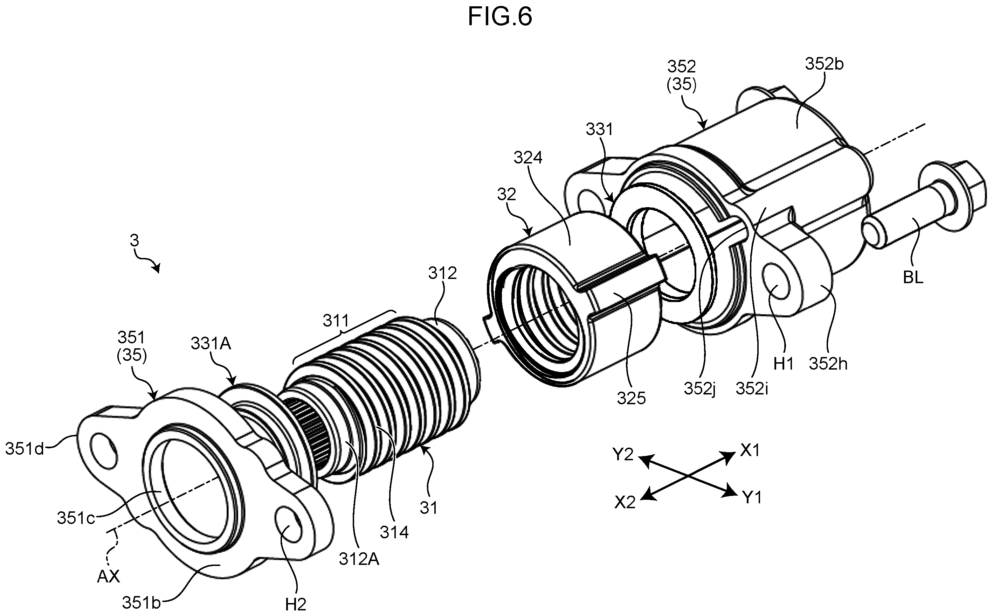

The worm wheel 18 is attached to the outer circumferential side of the output shaft 16 of the steering shaft 11. The worm wheel 18 includes a core metal portion 18a and a wheel tooth portion 18b. On the outer circumferential side of the core metal portion 18a, a wheel tooth portion 18b is provided. The worm shaft 19 and the motor 110 are located on the Y2 side (refer to FIG. 6) of the worm wheel 18. The worm shaft 19 is attached to the output shaft of the motor 110. The worm shaft 19 has a shaft tooth portion 19a. The shaft tooth portion 19a meshes with the wheel tooth portion 18b.

The motor 110 is a generation source of a steering reaction force. That is, the output of the motor 110 becomes reaction torque, and the reaction torque is transmitted from the steering shaft 11 to the steering wheel 10 via the worm wheel 18 and the worm shaft 19.

As illustrated in FIGS. 2 and 3, a rotating member 31 has a central axis AX, and the axial direction of the central axis AX matches the X direction. The rotating member 31 included in a stopper mechanism unit 3 is fitted, using spline fitting, to an X1 side end of the output shaft 16 of the steering shaft 11. That is, an internal spline 319 extending in the X direction is provided on the inner circumferential side of the rotating member 31, while an external spline extending in the X direction is provided on the outer circumferential side at the X1 side end of the output shaft 16. The external spline of the output shaft 16 is fitted to the internal spline 319 of the rotating member 31. With this configuration, the rotating member 31 is movable in the X direction with respect to the output shaft 16 and is not rotatable in a circumferential direction around the axis of the central axis AX. That is, the rotating member 31 rotates integrally with the output shaft 16.

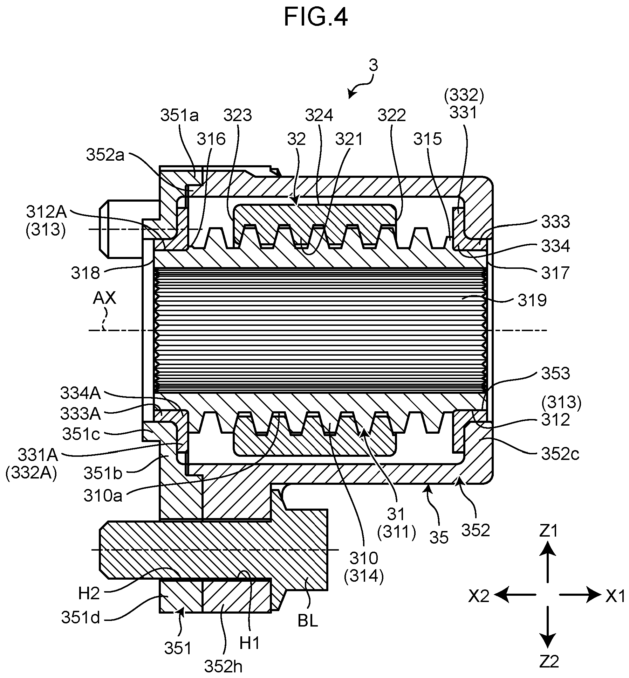

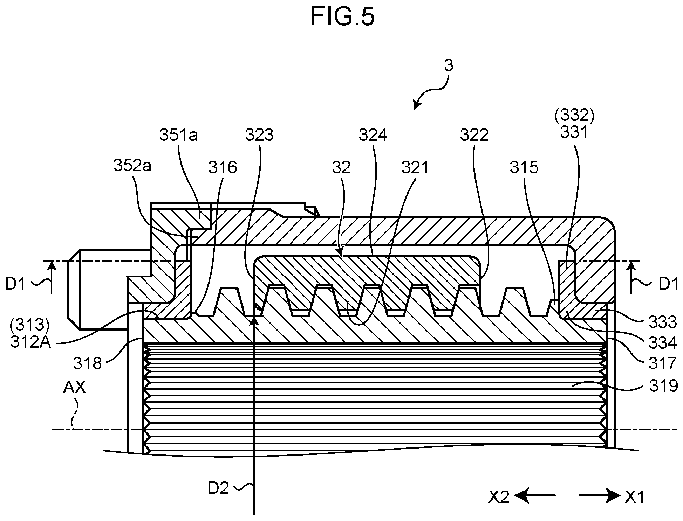

As illustrated in FIGS. 2 and 3, the stopper mechanism unit 3 is provided on the X1 side with respect to the output shaft 16 of the steering shaft 11. Hereinafter, the stopper mechanism unit 3 will be described in detail. FIG. 4 is a cross-sectional view of a stopper mechanism unit according to the first embodiment. FIG. 5 is an enlarged cross-sectional view of a part of FIG. 4. FIG. 6 is an exploded perspective view of the stopper mechanism unit according to the first embodiment.

As illustrated in FIG. 4, the stopper mechanism unit 3 includes a rotating member 31, a nut 32, a first annular member 331, a second annular member 331A, and a housing 35.

As illustrated in FIGS. 4 and 5, the rotating member 31 has a central axis AX. The axial direction of the central axis AX is the X direction. A direction around the central axis AX is the circumferential direction. A direction orthogonal to the central axis AX is the radial direction. The rotating member 31 includes an external thread portion 311, a first cylindrical surface portion 312, and a second cylindrical surface portion 312A.

The external thread portion 311 has an external thread 310 on the outer circumference thereof. The external thread 310 has a bottom 310a. The external thread 310 includes a complete thread 314, a first incomplete thread 315, and a second incomplete thread 316. The first incomplete thread 315 is located at an end on the most X1 side, and the second incomplete thread 316 is located at an end on the most X2 side.

The first cylindrical surface portion 312 is adjacent to the external thread portion 311 on the X1 side thereof. The first cylindrical surface portion 312 has a cylindrical surface 313. The cylindrical surface 313 extends in the circumferential direction around the central axis AX. The diameter of the cylindrical surface 313 is smaller than the outer diameter of the external thread portion 311. The second cylindrical surface portion 312A is adjacent to the external thread portion 311 on the X2 side thereof. The second cylindrical surface portion 312A has a cylindrical surface 313. The rotating member 31 has an axial end surface 317 at an end on the X1 side, and the rotating member 31 has an axial end surface 318 at an end on the X2 side. The rotating member 31 will be described in more detail below.

The nut 32 is provided on the outer circumferential side of the rotating member 31. The nut 32 has an internal thread 321 on the inner circumferential side. The internal thread 321 meshes with the external thread 310 of the rotating member 31. An outer circumferential surface 324 of the nut 32 is a cylindrical surface extending in the circumferential direction. An axial end surface 322 is provided at an end of the nut 32 on the X1 side, and an axial end surface 323 is provided at an end of the nut 32 on the X2 side. The axial end surface 322 of the nut 32 is capable of abutting on a vertical wall portion 332 of the first annular member 331. The axial end surface 323 of the nut 32 is capable of abutting on a vertical wall portion 332A of the second annular member 331A.

The first annular member 331 has an annular shape extending in the circumferential direction. The first annular member 331 is inserted into the first cylindrical surface portion 312. The inner diameter of the first annular member 331 is larger than the outer diameter of the first cylindrical surface portion 312. This allows the first annular member 331 to move in the X direction in a state of being inserted into the first cylindrical surface portion 312. The first annular member 331 includes a vertical wall portion 332 and a tubular portion 333. The vertical wall portion 332 extends outward in the radial direction. The tubular portion 333 extends in the circumferential direction. The vertical wall portion 332 and the tubular portion 333 are connected via a corner portion 334.

The second annular member 331A is inserted into the second cylindrical surface portion 312A. The second annular member 331A includes a vertical wall portion 332A and a tubular portion 333A. The vertical wall portion 332A extends outward in the radial direction. The vertical wall portion 332A is disposed on the X2 side of the nut 32 to face the nut 32. The tubular portion 333A extends in the circumferential direction. The vertical wall portion 332A and the tubular portion 333A are connected to each other via a corner portion 334A.

The housing 35 is disposed on the outer circumferential side of the rotating member 31, the nut 32, the first annular member 331, and the second annular member 331A. The housing 35 includes a first housing 351 and a second housing 352.

The first housing 351 is disposed on the X2 side in the housing 35. The first housing 351 includes a coupling portion 351a, a vertical wall portion 351b, a cylindrical portion 351c, and a flange 351d.

The coupling portion 351a is fitted to a coupled portion 352a of the second housing 352 and coupled to the coupled portion 352a. The vertical wall portion 351b extends in the radial direction, and the cylindrical portion 351c extends in the circumferential direction. The flange 351d is provided with a second bolt hole H2. There is provided an internal thread on the inner circumference of the second bolt hole H2, and the internal thread meshes with the external thread of a bolt BL.

The second housing 352 includes a coupled portion 352a, a cylindrical portion 352b, a radial wall portion 352c, and a flange 352h.

The cylindrical portion 352b extends in the circumferential direction. The radial wall portion 352c extends in the radial direction. The radial wall portion 352c is provided with a through hole 353 at the center in the radial direction, and the first annular member 331 and the rotating member 31 are fitted into the through hole 353. The flange 352h is provided with a first bolt hole H1. A through hole is provided in the inner circumference of the first bolt hole H1, and a shaft portion of the bolt BL passes through the through hole. Therefore, the flange 351d and the flange 352h are fastened via the bolt BL.

As illustrated in FIG. 5, the outer diameters of the first annular member 331 and the second annular member 331A are each a first outer diameter D1. Specifically, a first distance in the radial direction between the outer peripheral end of the vertical wall portion 332 of the first annular member 331 and the central axis AX is the same as a second distance in the radial direction between the outer peripheral end of the vertical wall portion 332A of the second annular member 331A and the central axis AX. The first outer diameter D1 is twice the first distance or twice the second distance. The outer diameter of the cylindrical surface 313 is a second outer diameter D2. The second outer diameter D2 is equal to the diameter of the bottom 310a of the external thread 310. The first outer diameter D1 is larger than the second outer diameter D2.

Next, an assembly procedure of the stopper mechanism unit 3 will be briefly described with reference to FIG. 6. As illustrated in FIG. 6, the rotating member 31 is fastened to the inner circumferential side of the nut 32 as a first procedure, and then, the first annular member 331 is inserted into the first cylindrical surface portion 312 of the rotating member 31, and the second annular member 331A is inserted into the second cylindrical surface portion 312A. Next, in this state, the rotating member 31, the nut 32, the first annular member 331, and the second annular member 331A are inserted into the second housing 352. At that time, a projection 325 is fitted into a groove portion 352j. Then, the first housing 351 is bolted to the second housing 352. Specifically, the flange 351d is abutted against the flange 352h, allowing the second bolt hole H2 and the first bolt hole H1 to communicate with each other. By passing the bolt BL through the first bolt hole H1 so as to be meshed with the internal thread of the second bolt hole H2, the assembly of the stopper mechanism unit 3 is completed. Since the projection 325 of the nut 32 is fitted into the groove portion 352j of the second housing 352 as described above, the nut 32 makes a linear motion in the X direction without rotating with respect to the second housing 352.

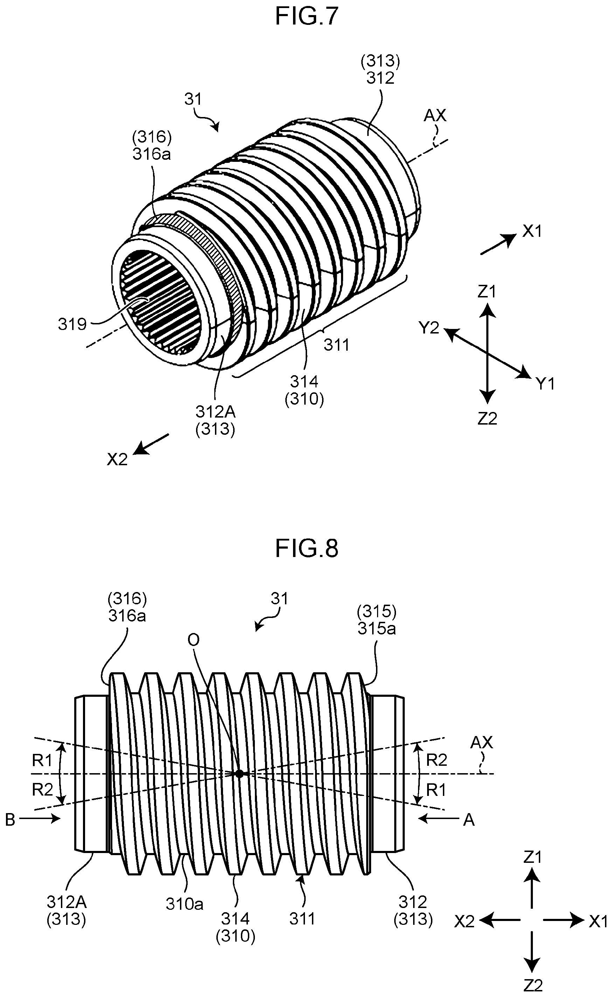

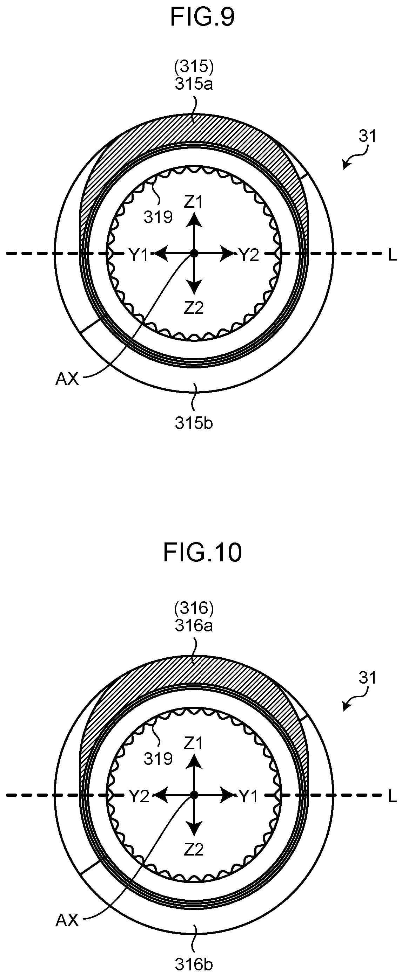

Next, a configuration of the rotating member 31 will be described. FIG. 7 is a perspective view of the rotating member of FIG. 6. FIG. 8 is a side view of the rotating member of FIG. 6. FIG. 9 is a schematic diagram of the rotating member of FIG. 8 as viewed in direction A. FIG. 10 is a schematic diagram of the rotating member of FIG. 8 as viewed in direction B.

First, in the rotating member 31 according to the embodiment, when viewed in the X direction, an axial end surface portion 315a and an axial end surface portion 316a are provided on a Z1 side which is the same side with respect to a straight line L orthogonal to the central axis AX as illustrated in FIGS. 9 and 10. The straight line L extends in the Y direction. As illustrated in FIG. 8, in the rotating member 31, the first incomplete thread 315 is disposed at an end of the external thread portion 311 on the most X1 side. The axial end surface portion 315a on the X1 side of the first incomplete thread 315 is a hatched portion illustrated in FIG. 9. The axial end surface portion 315a extends in the radial direction along a first plane orthogonal to the central axis AX. In FIG. 9, the axial end surface portion 315a is provided on the Z1 side in the circumferential direction of the external thread portion 311. Specifically, the axial end surface portion 315a extends over a half circumference from the Y1 side to the Y2 side through the Z1 side. The Y direction is a radial direction orthogonal to (intersecting) the X direction (axial direction), and the Z direction is a radial direction orthogonal to (intersecting) the X direction and the Y direction. The Y1 side is one side in the Y direction, and the Y2 side is the other side in the Y direction. The Z1 side is one side in the Z direction, and the Z2 side is the other side in the Z direction. The radial width is minimum on the Y1 side, and gradually increases from the Y1 side toward the Z1 side, and becomes maximum on the Z1 side. The radial width gradually decreases toward the Y2 side, and becomes minimum at Y2. The radial width on the Z1 side is the same as the width of the complete thread 314 illustrated in FIG. 9. In contrast, a separation portion 315b other than hatched portion illustrated in FIG. 9 is located on the opposite side to the hatched portion with the central axis AX interposed therebetween in FIG. 9. That is, it extends in the circumferential direction from the Y1 side to the Y2 side through the Z2 side over a half circumference. The "incomplete thread" in the present invention is a "threaded portion with incomplete profile generated by chamfering part or leading part of threading tool" (refer to JIS B0101).

Here, assuming a first plane orthogonal to the central axis AX described above, the hatched portion, namely, the axial end surface portion 315a abuts on the first plane. The separation portion 315b is separated from the first plane toward the X2 side (center side in the axial direction of the rotating member 31). When viewed in the X direction, the axial end surface portion 315a is located on the opposite side to the separation portion 315b with respect to the straight line L orthogonal to the central axis AX.

As illustrated in FIG. 10, the second incomplete thread 316 is disposed at the end of the external thread portion 311 on the most X2 side. The axial end surface portion 316a on the X2 side of the second incomplete thread 316 is a hatched portion illustrated in FIG. 10. The axial end surface portion 316a extends in the radial direction along a second plane orthogonal to the central axis AX. In FIG. 10, the axial end surface portion 316a is provided on the Z1 side in the circumferential direction of the external thread portion 311. Specifically, the axial end surface portion 316a extends over a half circumference from the Y2 side to the Y1 side through the Z1 side. The radial width is minimum on the Y2 side, and gradually increases from the Y2 side toward the Z1 side, and becomes maximum on the Z1 side. The radial width gradually decreases toward the Y1 side, and becomes minimum at Y1. In contrast, a separation portion 316b illustrated in FIG. 10 is located on the opposite side to the axial end surface portion 316a with respect to the straight line L orthogonal to the central axis AX in FIG. 10. That is, the separation portion 316b extends in the circumferential direction over a half circumference from the Y2 side to the Y1 side via the Z2 side.

Here, assuming a second plane orthogonal to the central axis AX described above, the hatched portion, namely, the axial end surface portion 316a abuts on the second plane. The separation portion 315b illustrated in FIG. 10 is separated from the second plane toward the X2 side (center side in the axial direction of the rotating member 31). When viewed from the X direction, the axial end surface portion 316a is located on the opposite side to the separation portion 316b with respect to the straight line L orthogonal to the central axis AX.

In this manner, the rotating member 31 has the axial end surface portion 315a and the axial end surface portion 316a at both ends in the X direction. Both the axial end surface portion 315a and the axial end surface portion 316a are provided over substantially a half circumference on the Z1 side which is the same direction side in the circumferential direction. In other words, in the rotating member 31 according to the embodiment, when viewed in the X direction, the axial end surface portion 315a and the axial end surface portion 316a are provided on a Z1 side which is the same side with respect to the straight line L orthogonal to the central axis AX.

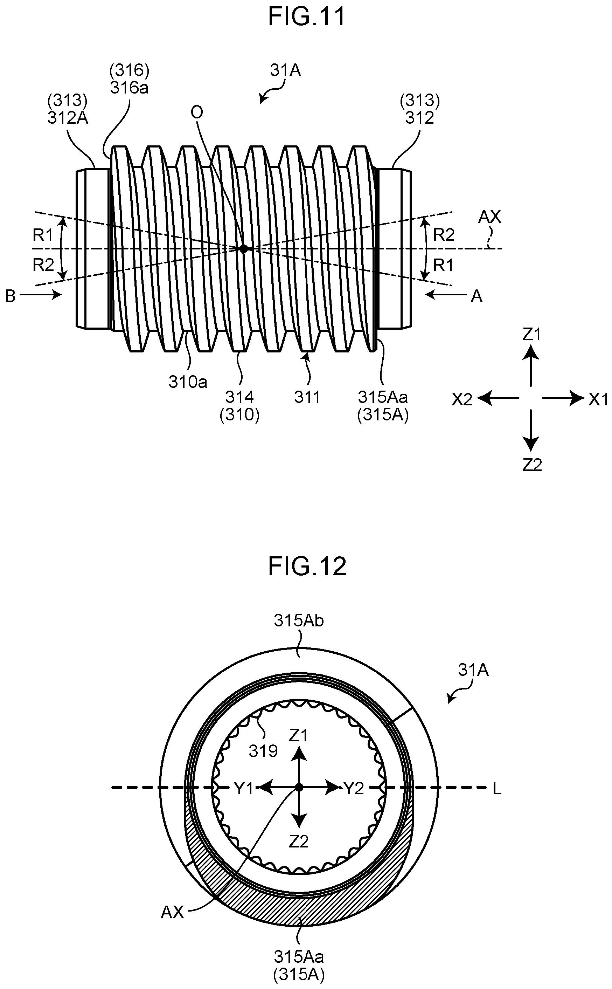

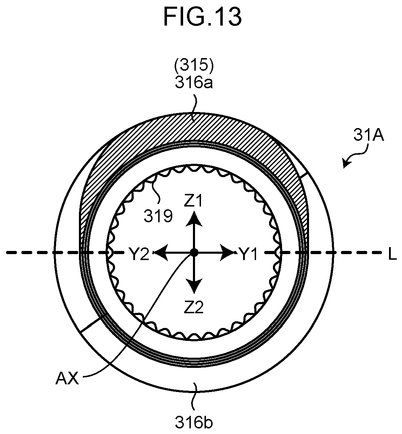

Next, a rotating member 31A according to a modification will be described. FIG. 11 is a side view of a rotating member according to the modification. FIG. 12 is a schematic diagram of the rotating member of FIG. 11 as viewed in direction A. FIG. 13 is a schematic diagram of the rotating member of FIG. 11 as viewed in direction B.

In the rotating member 31A according to the modification, when viewed in the X direction, an axial end surface portion 315Aa and the axial end surface portion 316a are respectively provided on a Z2 side and a Z1 side, that is, the opposite sides with respect to the straight line L orthogonal to the central axis AX. As illustrated in FIG. 11, a first incomplete thread 315A is disposed at an end of the external thread portion 311 on the most X1 side. The axial end surface portion 315Aa on the X1 side in the first incomplete thread 315A is a hatched portion illustrated in FIG. 12. The axial end surface portion 315Aa extends in the radial direction along a first plane orthogonal to the central axis AX. In FIG. 12, the axial end surface portion 315Aa is provided on the Z2 side in the circumferential direction of the external thread portion 311. Specifically, the axial end surface portion 315Aa extends over a half circumference from the Y1 side to the Y2 side through the Z2 side. The radial width is minimum on the Y1 side, and gradually increases from the Y1 side toward the Z2 side, and becomes maximum on the Z2 side. The radial width gradually decreases toward the Y2 side, and becomes minimum at Y2. In contrast, a separation portion 315Ab illustrated in FIG. 12 is located on the opposite side to the axial end surface portion 315Aa with respect to the straight line L orthogonal to the central axis AX. That is, the separation portion 315Ab extends in the circumferential direction over a half circumference from the Y1 side to the Y2 side via the Z1 side.

Here, assuming the first plane orthogonal to the central axis AX described above, the hatched portion, namely, the axial end surface portion 315Aa abuts on the first plane. The separation portion 315Ab illustrated in FIG. 12 is separated from the first plane toward the X2 side (center side in the axial direction of the rotating member 31A).

As illustrated in FIG. 11, the second incomplete thread 316 is disposed at the end of the external thread portion 311 on the most X2 side. The axial end surface portion 316a on the X2 side of the second incomplete thread 316 is a hatched portion illustrated in FIG. 13. The axial end surface portion 316a extends in the radial direction along a second plane orthogonal to the central axis AX. The axial end surface portion 316a illustrated in FIG. 13 is the same as the axial end surface portion 316a illustrated in FIG. 10 described above.

In this manner, the rotating member 31A has the axial end surface portion 315Aa and the axial end surface portion 316a at both ends in the X direction. The axial end surface portion 315Aa and the axial end surface portion 316a are provided over substantially a half circumference on the Z2 side and the Z1 side, respectively, which are opposite to each other in the circumferential direction. In other words, in the rotating member 31A according to the modification, when viewed in the X direction, an axial end surface portion 315Aa and the axial end surface portion 316a are respectively provided on a Z2 side and a Z1 side, that is, the opposite sides with respect to the straight line L orthogonal to the central axis AX.

As described above, in the vehicle steering device 100 according to the present embodiment, the stopper mechanism unit 3 includes: the rotating member 31 including the external thread portion 311 and the pair of cylindrical surface portions (the first cylindrical surface portion 312 and the second cylindrical surface portion 312A); the nut 32 that moves in the X direction (axial direction) with respect to the rotating member 31; the pair of annular members (the first annular member 331 and the second annular member 331A) each of which is configured to be inserted into a corresponding one of the pair of cylindrical surface portions of the rotating member 31; and the housing 35. The annular member has vertical wall portions 332 and 332A each having a flat plate shape. In the external thread portion 311 of the rotating member 31, the first incomplete thread 315 is disposed at the end on the X1 side (one side in the axial direction), and the second incomplete thread 316 is disposed at the end on the X2 side (the other side in the axial direction). The surface of the first incomplete thread 315 on the X1 side is provided with the axial end surface portion 315a and the separation portion 315b. The surface of the second incomplete thread 316 on the X2 side is provided with the axial end surface portion 316a and the separation portion 316b.

As described above, in the stopper mechanism unit according to Patent Literature 1, the incomplete thread has lower strength than the complete thread, and thus, a cylindrical surface portion is provided at a position on the outer side and the inner circumferential side in the axial direction with respect to the end of the incomplete thread portion in the axial direction so as to prevent the annular member and the leaf spring from contacting the incomplete thread. In addition, the annular member is fitted to the cylindrical surface portion, and the leaf spring is fitted to the outer circumferential side of the annular member. This might enlarge the stopper mechanism unit according to Patent Literature 1 in the axial direction, having a possibility of eventually enlarging the vehicle steering device.

In contrast, in the stopper mechanism unit 3 according to the present embodiment, the axial end surface portion 315a on the X1 side of the first incomplete thread 315 abuts on the end surface on the X2 side of the vertical wall portion 332 of the first annular member 331, while the axial end surface portion 316a on the X2 side of the second incomplete thread 316 abuts on the end surface on the X1 side of the vertical wall portion 332A of the second annular member 331A.

Therefore, as illustrated in FIG. 4, in the present embodiment, first, when the nut 32 moves to the X1 side by the rotation of the rotating member 31 and the axial end surface 322 of the nut 32 abuts on the vertical wall portion 332 of the first annular member 331, the rotating member 31 is pushed out to the X2 side together with the nut 32, and the rotating member 31 pushed out to the X2 side compresses the vertical wall portion 332A of the second annular member 331A on the X2 side and pushes back the axial end surface portion 316a of the second incomplete thread 316 to the X1 side by the reaction force, but the separation portion 316b does not abut on the vertical wall portion 332A. Furthermore, as illustrated in FIG. 4, when the nut 32 moves to the X2 side by the rotation of the rotating member 31 and the axial end surface 323 of the nut 32 abuts on the vertical wall portion 332A of the second annular member 331A, the rotating member 31 is pushed out to the X1 side together with the nut 32, and the rotating member 31 pushed out to the X1 side compresses the vertical wall portion 332 of the first annular member 331 on the X1 side, and pushes back the axial end surface portion 315a of the first incomplete thread 315 to the X1 side by the reaction force, but the separation portion 315b does not abut on the vertical wall portion 332.

To summarize the above, in the stopper mechanism unit 3 according to the present embodiment, when the nut 32 moves to the X1 side by the rotation of the rotating member 31, the vertical wall portion 332A of the second annular member 331A pushes back the axial end surface portion 316a of the second incomplete thread 316 to the X1 side, but the separation portion 316b does not abut on the vertical wall portion 332A. In addition, when the nut 32 moves to the X2 side by the rotation of the rotating member 31, the vertical wall portion 332 of the first annular member 331 pushes back the axial end surface portion 315a of the first incomplete thread 315 to the X2 side, but the separation portion 315b does not abut on the vertical wall portion 332. In this manner, in the stopper mechanism unit 3 according to the present embodiment, the first annular member 331 is allowed to abut on the first incomplete thread 315 of the rotating member 31, and the second annular member 331A is allowed to abut on the second incomplete thread 316.

Therefore, in contrast to the stopper mechanism unit according to Patent Literature 1 in which the annular member and the leaf spring do not abut on the incomplete thread, the stopper mechanism unit 3 according to the present embodiment can be set to have a smaller size in the axial direction, making it eventually possible to provide the vehicle steering device 100 that has achieved further downsizing.

Next, the rotating member 31 according to the embodiment illustrated in FIGS. 9 and 10 and the rotating member 31A according to the modification illustrated in FIGS. 12 and 13 will be compared with each other to describe a difference in the swing direction illustrated in FIGS. 8 and 11. In the rotating member 31 according to the embodiment illustrated in FIGS. 9 and 10, when the rotating member 31 is viewed in the X direction, the axial end surface portion 315a of the first incomplete thread 315 and the axial end surface portion 316a of the second incomplete thread 316 are disposed on the Z1 side which is the same side with respect to the straight line L orthogonal to the central axis AX. A swing direction R1 illustrated in FIG. 8 is the clockwise direction (direction that follows hands of a clock) around a center O located at the center of the central axis AX in the X direction when the rotating member 31 is viewed from the Y1 side. A swing direction R2 is the counterclockwise direction (direction opposite to the way the hands of a clock move) around the center O when the rotating member 31 is viewed from the Y1 side.

As described above, as illustrated in FIG. 4, first, when the nut 32 moves to the X1 side by the rotation of the rotating member 31 and the axial end surface 322 of the nut 32 abuts on the vertical wall portion 332 of the first annular member 331, the rotating member 31 is pushed out to the X2 side together with the nut 32, and the rotating member 31 pushed out to the X2 side compresses the vertical wall portion 332A of the second annular member 331A on the X2 side, and pushes back the axial end surface portion 316a of the second incomplete thread 316 to the X1 side by the reaction force. Here, as illustrated in FIG. 10, the axial end surface portion 316a is disposed on the Z1 side with respect to the separation portion 316b, allowing the rotating member 31 to swing in the swing direction R1 illustrated in FIG. 8.

As illustrated in FIG. 4, when the nut 32 moves to the X2 side by the rotation of the rotating member 31 and the axial end surface 323 of the nut 32 abuts on the vertical wall portion 332A of the second annular member 331A, the rotating member 31 is pushed out to the X1 side together with the nut 32, and the rotating member 31 pushed out to the X1 side compresses the vertical wall portion 332 of the first annular member 331 on the X1 side, and pushes back the axial end surface portion 315a of the first incomplete thread 315 to the X1 side by the reaction force. Here, as illustrated in FIG. 9, the axial end surface portion 315a is disposed on the Z1 side with respect to the separation portion 315b, allowing the rotating member 31 to swing in the swing direction R2 illustrated in FIG. 8.

In this manner, in the rotating member 31 according to the embodiment, the swing directions of the rotating member 31 when the rotating member 31 is viewed from the Y1 side are opposite to each other between the case where the nut 32 moves to the X1 side and the case where the nut moves to the X2 side. Therefore, a load is uniformly applied to the first annular member 331 and the second annular member 331A, making it eventually possible improve the durability of the first annular member 331 and the second annular member 331A.

Next, the swing direction of the rotating member 31A according to the modification will be described. In the rotating member 31A of the mode illustrated in FIGS. 12 and 13, when the rotating member 31A is viewed in the X direction, the axial end surface portion 315Aa of the first incomplete thread 315A and the axial end surface portion 316a of the second incomplete thread 316 are respectively disposed on the Z2 side and the Z1 side opposite to each other with respect to the straight line L orthogonal to the central axis AX when viewed in the X direction. The swing direction R1 illustrated in FIG. 11 is the clockwise direction (direction that follows hands of a clock) around a center O located at the center of the central axis AX in the X direction when the rotating member 31A is viewed from the Y1 side. The swing direction R2 is the counterclockwise direction (direction opposite to the way the hands of a clock move) around the center O when the rotating member 31A is viewed from the Y1 side.

As described above, as illustrated in FIG. 4, first, when the nut 32 moves to the X1 side by the rotation of the rotating member 31A and the axial end surface 322 of the nut 32 abuts on the vertical wall portion 332 of the first annular member 331, the rotating member 31A is pushed out to the X2 side together with the nut 32, and the rotating member 31A pushed out to the X2 side compresses the vertical wall portion 332A of the second annular member 331A on the X2 side, and pushes back the axial end surface portion 316a of the second incomplete thread 316 to the X1 side by the reaction force. Here, as illustrated in FIG. 13, the axial end surface portion 316a is disposed on the Z1 side with respect to the separation portion 316b, allowing the rotating member 31A to swing in the swing direction R1 illustrated in FIG. 11.

As illustrated in FIG. 4, when the nut 32 moves to the X2 side by the rotation of the rotating member 31A and the axial end surface 323 of the nut 32 abuts on the vertical wall portion 332A of the second annular member 331A, the rotating member 31A is pushed out to the X1 side together with the nut 32, and the rotating member 31A pushed out to the X1 side compresses the vertical wall portion 332 of the first annular member 331 on the X1 side, and pushes back the axial end surface portion 315Aa of the first incomplete thread 315A to the X1 side by the reaction force. Here, as illustrated in FIG. 12, the axial end surface portion 315Aa is disposed on the Z2 side with respect to the separation portion 315Ab, allowing the rotating member 31A to swing in the swing direction R1 illustrated in FIG. 12.

In this manner, in the rotating member 31A according to the modification, even when the nut 32 moves to either the X1 side or the X2 side, the rotating member 31A swings in the swing direction R1. In a case where the rotating member 31A swings in the swing direction R1, locating the separation portion 315Ab on the Z1 side and the separation portion 316b on the Z2 side will be advantageous in that the rotating member 31A more easily swings. Hereinafter, this will be described specifically. In a case where the rotating member 31A swings in the swing direction R1 when the nut 32 moves to the X1 side, the axial end surface portion 316a slightly moves to the X1 side with respect to the second annular member 331A, and the separation portion 316b slightly moves to the X2 side. That is, the separation portion 316b moves in a direction approaching the vertical wall portion 332A. Here, since the separation portion 316b is located on the X1 side of the axial end surface portion 316a, a gap is generated between the separation portion 316b and the vertical wall portion 332A. This makes it easier for the separation portion 316b to approach the vertical wall portion 332A of the second annular member 331A, allowing the rotating member 31A to easily swing in the swing direction R1.

In addition, in a case where the rotating member 31A swings in the swing direction R1 when the nut 32 moves to the X2 side, the axial end surface portion 315Aa slightly moves to the X2 side with respect to the first annular member 331, and the separation portion 315Ab slightly moves to the X1 side. That is, the separation portion 315Ab moves in a direction approaching the vertical wall portion 332. Here, since the separation portion 315Ab is located on the X2 side of the axial end surface portion 315Aa, a gap is generated between the separation portion 315Ab and the vertical wall portion 332. This makes it easier for the separation portion 315Ab to approach the vertical wall portion 332 of the first annular member 331, allowing the rotating member 31A to easily swing in the swing direction R1.

### (Second Embodiment)

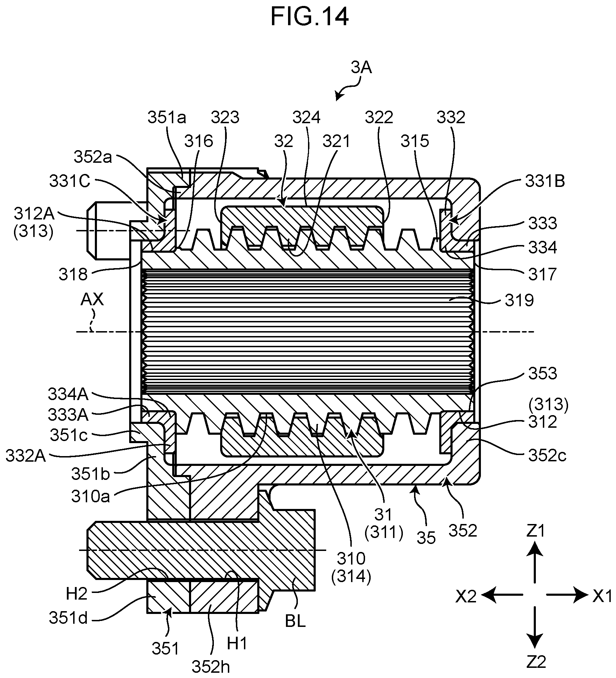

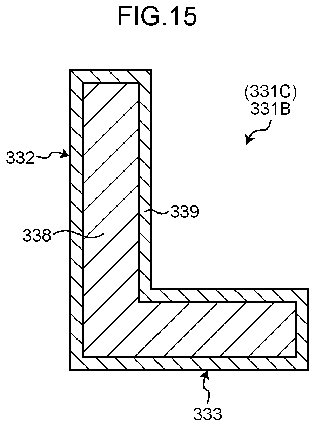

Next, a second embodiment will be described. FIG. 14 is a cross-sectional view of a stopper mechanism unit according to the second embodiment. FIG. 15 is an enlarged cross-sectional view of a first annular member of FIG. 14.

In a stopper mechanism unit 3A according to the second embodiment, a first annular member 331B is provided as a difference from the stopper mechanism unit 3 according to the first embodiment.

As illustrated in FIGS. 14 and 15, the first annular member 331B includes a vertical wall portion 332 and a tubular portion 333. Each of the vertical wall portion 332 and the tubular portion 333 includes a main body 338 and a covering layer 339.

The covering layer 339 is provided on the surface layer portion of the main body 338. The main body 338 is formed of metal, for example, and the covering layer 339 is formed of resin, for example. The elastic modulus of the main body 338 is 205 GPa, for example. The elastic modulus of the covering layer 339 is 650 MPa, for example. In this manner, the elastic modulus of the covering layer 339 is smaller than the elastic modulus of the main body 338.

As described above, in the vehicle steering device according to the second embodiment, the first annular member 331B and a second annular member 331C include the main body 338 and the covering layer 339 provided on the surface layer portion of the main body 338. The elastic modulus of the covering layer 339 is smaller than the elastic modulus of the main body 338. This makes it possible to reduce a contact sound (interference sound) when the nut 32 abuts on the first annular member 331B or the second annular member 331C. It is also allowable to select a material that reduces the coefficient of friction with the mating material as the material of the covering layer 339 to prevent catching at the time of nut abutment. In addition, grease lubrication may be used instead of the covering layer.

### (Third Embodiment)

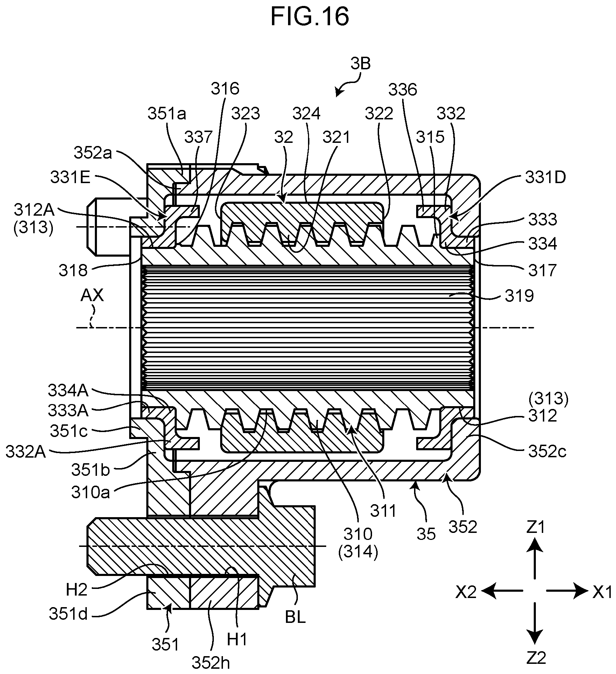

A third embodiment will be described. FIG. 16 is a cross-sectional view of a stopper mechanism unit according to the third embodiment.

In a stopper mechanism unit 3B according to the third embodiment, a first annular member 331D and a second annular member 331E are provided as differences from the stopper mechanism unit 3 according to the first embodiment.

The first annular member 331 according to the first embodiment includes the vertical wall portion 332 and the tubular portion 333. In contrast, the first annular member 331D according to the third embodiment further includes a protrusion 336. That is, the first annular member 331D includes the vertical wall portion 332, the tubular portion 333, and the protrusion 336. The protrusion 336 extends in the circumferential direction. The protrusion 336 extends toward the X2 side from the outer end of the vertical wall portion 332 in the radial direction.

The second annular member 331E includes a vertical wall portion 332A, a tubular portion 333A, and a protrusion 337. The protrusion 337 extends in the circumferential direction. The protrusion 337 extends toward the X1 side from the outer end of the vertical wall portion 332A in the radial direction.

In this manner, the first annular member 331D has the protrusion 336 that protrudes toward the nut in the X direction (axial direction) and is capable of abutting on the nut 32. The second annular member 331E has the protrusion 337 that protrudes toward the nut in the X direction (axial direction) and is capable of abutting on the nut 32.

As described above, in the vehicle steering device according to the third embodiment, each of the first annular member 331D and the second annular member 331E has the protrusion 336 or the protrusion 337 that protrudes toward the nut in the X direction and is capable of abutting on the nut 32.

Therefore, in the third embodiment, a movable distance of the nut 32 in the X direction is small as compared with the first annular member 331 and the second annular member 331A having no protrusion 336 or the protrusion 337 according to the first embodiment. With this configuration, the limit range of the turning angle of the turning wheel 22 can be reduced to set the rotatable angle of the steering wheel 10 to be smaller.

### (Fourth Embodiment)

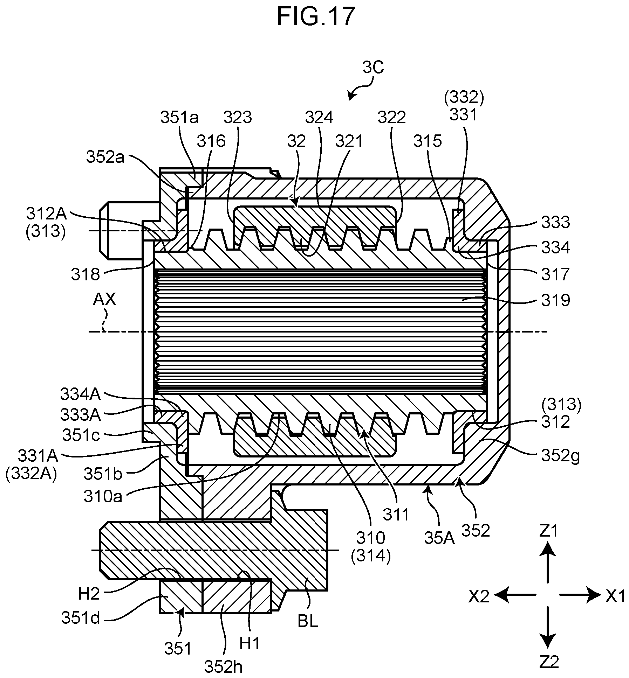

A fourth embodiment will be described. FIG. 17 is a cross-sectional view of a stopper mechanism unit according to the fourth embodiment.

In a stopper mechanism unit 3C according to the fourth embodiment, a radial wall portion 352c is provided as a difference from the stopper mechanism unit 3 according to the first embodiment. Details will be described below.

A housing 35A according to the fourth embodiment includes a cylindrical portion 352b (housing main body) and a sealing portion 352g that seals the X1 side of the cylindrical portion 352b. In the housing 35A, the X1 side end is sealed by the sealing portion 352g.

As described above, the housing 35A according to the present embodiment includes: the cylindrical portion 352b (housing main body) having a cylindrical shape extending in the circumferential direction; and the sealing portion 352g that seals the X1 side of the cylindrical portion 352b.

In this manner, since the housing 35A is sealed by the sealing portion 352g, it is possible to prevent entry of foreign matter such as dust to the inside of the housing 35A. In addition, it is possible to inhibit leakage of the oil inside the housing 35A to the outside.

### (Fifth Embodiment)

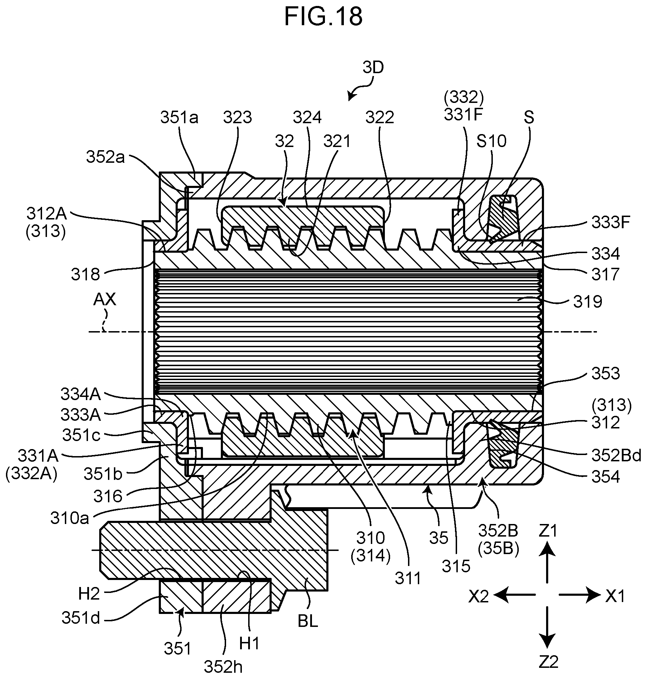

A fifth embodiment will be described. FIG. 18 is a cross-sectional view of a stopper mechanism unit according to the fifth embodiment.

In a stopper mechanism unit 3D according to the fifth embodiment, a seal member S is provided in a housing 35B. A brief description will be given below. As illustrated in FIG. 18, a second housing 352B has a projection 352Bd at an X1 side end. On the inner circumferential side of the projection 352Bd, a recess 354 is provided. The recess 354 extends annularly in the circumferential direction. In the cross section illustrated in FIG. 18, the recess 354 has a substantially trapezoidal shape in which the distance in the X direction decreases toward the outside in the radial direction. The recess 354 internally contains a seal member S which has an annular shape.

A first annular member 331F includes a vertical wall portion 332 and a tubular portion 333F. The first annular member 331F is provided as a difference from the first annular member 331 in the tubular portion 333F. Specifically, the distance in the X direction of the tubular portion 333F of the first annular member 331F is larger than the distance in the X direction of the tubular portion 333 of the first annular member 331. The tubular portion 333F seals the inner circumferential side opening of the recess 354. A distal end S10 on the inner circumferential side of the seal member S abuts on the tubular portion 333F.

As described above, in the vehicle steering device according to the fifth embodiment, the second housing 352B has the projection 352Bd provided with the recess 354, and the annular seal member S is accommodated in the recess 354. A distal end S10 on the inner circumferential side of the seal member S abuts on the tubular portion 333F. The radial wall portion 352c of the second housing 352B has a through hole 353.

The seal member S can inhibit leakage of the oil inside the second housing 352B to the outside. In addition, foreign matter such as dust can enter from the through hole 353 toward the inside of the second housing 352B. However, since the distal end S10 of the seal member S abuts on the first annular member 331F, entry of the foreign matter can be inhibited.

### Reference Signs List

- 3, 3A, 3B, 3C, 3D: STOPPER MECHANISM UNIT
- 4: STEERING UNIT
- 10: STEERING WHEEL
- 11: STEERING SHAFT
- 12: STEERING HOUSING
- 13: STEERING REACTION FORCE DEVICE
- 14: CONTROL DEVICE (ECU)
- 15: COLUMN SHAFT
- 16: OUTPUT SHAFT
- 17: TORSION BAR
- 18: WORM WHEEL
- 18a: CORE METAL PORTION
- 18b: WHEEL TOOTH PORTION
- 19: WORM SHAFT
- 19a: SHAFT TOOTH PORTION
- 20: TURNING UNIT
- 21: TURNING MOTOR
- 22: TURNING WHEEL
- 31, 31A: ROTATING MEMBER
- 32: NUT
- 35, 35A, 35B: HOUSING
- 100: VEHICLE STEERING DEVICE
- 110: MOTOR
- 121: SHAFT HOLDING MEMBER
- 122: PIN
- 123: ROTATION SUPPORT MEMBER
- 124: ROTATION SUPPORT MEMBER
- 125, 126: BEARING
- 127: SUB-HOUSING
- 128: TORQUE SENSOR
- 310: EXTERNAL THREAD
- 310a: BOTTOM
- 311: EXTERNAL THREAD PORTION
- 312: FIRST CYLINDRICAL SURFACE PORTION
- 312A: SECOND CYLINDRICAL SURFACE PORTION
- 313: CYLINDRICAL SURFACE
- 314: COMPLETE THREAD
- 315, 315A: FIRST INCOMPLETE THREAD
- 315a, 315Aa: AXIAL END SURFACE PORTION
- 315b, 315Ab: SEPARATION PORTION
- 316: SECOND INCOMPLETE THREAD
- 316a: AXIAL END SURFACE PORTION
- 316b: SEPARATION PORTION
- 317: AXIAL END SURFACE
- 318: AXIAL END SURFACE
- 319: INTERNAL SPLINE
- 321: INTERNAL THREAD
- 322: AXIAL END SURFACE
- 323: AXIAL END SURFACE
- 324: OUTER CIRCUMFERENTIAL SURFACE
- 325: PROJECTION
- 331: FIRST ANNULAR MEMBER
- 331A: SECOND ANNULAR MEMBER
- 331B: FIRST ANNULAR MEMBER
- 331C: SECOND ANNULAR MEMBER
- 331D: FIRST ANNULAR MEMBER
- 331E: SECOND ANNULAR MEMBER
- 331F: FIRST ANNULAR MEMBER
- 332: VERTICAL WALL PORTION
- 332A: VERTICAL WALL PORTION
- 333: TUBULAR PORTION
- 333A, 333F: TUBULAR PORTION
- 334: CORNER PORTION
- 334A: CORNER PORTION
- 336: PROTRUSION
- 337: PROTRUSION
- 338: MAIN BODY
- 339: COVERING LAYER
- 351: FIRST HOUSING
- 351a: COUPLING PORTION
- 351b: VERTICAL WALL PORTION
- 351c: CYLINDRICAL PORTION
- 351d: FLANGE
- 352: SECOND HOUSING
- 352a: COUPLED PORTION
- 352b: CYLINDRICAL PORTION (HOUSING MAIN BODY)
- 352c: RADIAL WALL PORTION
- 352g: SEALING PORTION
- 352h: FLANGE
- 352j: GROOVE PORTION
- 352B: SECOND HOUSING
- 352Bd: PROJECTION
- 353: THROUGH HOLE
- 354: RECESS
- BL: BOLT
- H1: FIRST BOLT HOLE
- H2: SECOND BOLT HOLE
- L: STRAIGHT LINE
- R1, R2: SWING DIRECTION
- S: SEAL MEMBER
- S10: DISTAL END

## Claims

1. A vehicle steering device in which a steering wheel and a turning wheel are mechanically disconnected,
the vehicle steering device comprising
a stopper mechanism unit that regulates a range of a rotation angle of the steering wheel when the steering wheel is rotated,
wherein the stopper mechanism unit comprises:
a rotating member that comprises an external thread portion and a pair of cylindrical surface portions, the external thread portion having an outer circumference provided with an external thread comprising a complete thread and an incomplete thread, the pair of cylindrical surface portions being adjacent to the external thread portion on one side and the other side in an axial direction of a central axis and having a cylindrical surface having a diameter smaller than an outer diameter of the external thread portion, the rotating member being configured to rotate in a circumferential direction around the central axis as the steering wheel rotates;
a nut that has an inner circumference provided with an internal thread configured to mesh with the external thread and is configured to move in an axial direction with respect to the rotating member by the rotation of the rotating member;
a pair of annular members each of which is configured to be inserted into a corresponding one of the pair of cylindrical surface portions of the rotating member so as to be capable of abutting on the nut in the axial direction; and
a housing configured to be disposed on an outer circumferential side of the rotating member, the nut, and the pair of annular members and configured to support each of the pair of annular members between the housing and the rotating member,
the external thread portion of the rotating member has a configuration in which a first incomplete thread is disposed at an end on one side in an axial direction, a second incomplete thread is disposed at an end on the other side in the axial direction, and the complete thread is disposed between the first incomplete thread and the second incomplete thread,
an axial end surface portion extending along a first plane orthogonal to the central axis and a separation portion separating from the first plane on the other side in the axial direction are provided on a surface on one side in the axial direction of the first incomplete thread, and
an axial end surface portion extending along a second plane orthogonal to the central axis and a separation portion separating from the second plane on one side in the axial direction are provided on a surface on the other side in the axial direction of the second incomplete thread.

2. The vehicle steering device according to claim 1,
wherein, when the rotating member is viewed in the axial direction,
the axial end surface portion of the first incomplete thread and the axial end surface portion of the second incomplete thread are disposed on a same side with respect to the central axis.

3. The vehicle steering device according to claim 1,
wherein, when the rotating member is viewed in the axial direction,
the axial end surface portion of the first incomplete thread and the axial end surface portion of the second incomplete thread are disposed on opposite sides with respect to the central axis.

4. The vehicle steering device according to any one of claims 1 to 3,
wherein at least one of the pair of annular members comprises a main body and a covering layer provided on a surface layer portion of the main body, and an elastic modulus of the covering layer is smaller than an elastic modulus of the main body.

5. The vehicle steering device according to any one of claims 1 to 3,
wherein at least one of the pair of annular members has a protrusion that protrudes toward the nut in the axial direction and is capable of abutting on the nut.

6. The vehicle steering device according to any one of claims 1 to 3,
wherein the housing comprises: a housing main body having a tubular shape and extending in a circumferential direction; and a sealing portion configured to seal one side in an axial direction of the housing main body.

7. The vehicle steering device according to any one of claims 1 to 3,
wherein the housing comprises:
a cylindrical housing main body extending in a circumferential direction and having an opening on one side in an axial direction;
a projection disposed at an end on one side in the axial direction of the housing main body and provided with a recess that protrudes toward an inner circumferential side and is recessed toward an outer circumferential side; and
a seal member accommodated in the recess, and
wherein the annular member is disposed on an inner circumferential side of the recess of the projection, and a distal end on an inner circumferential side of the seal member is capable of abutting on an outer circumferential surface of the annular member.
